# EUROPEAN PATENT APPLICATION

(11) **EP 4 008 493 A1**
(43) Date of publication of application: **08.06.2022**
(21) Application number: 20212212.3
(22) Date of filing: 07.12.2020
(51) Int. Cl.: B25J 5/02, B25J 9/16, B25J 11/00

(54) **KITCHEN ASSISTANCE ROBOT, ROBOTIC SYSTEM, ROBOT-ASSISTED KITCHEN ENVIRONMENT AND METHOD FOR OPERATING THE KITCHEN ASSISTANCE ROBOT**

(71) Applicant: ELECTROLUX APPLIANCES AKTIEBOLAG, 105 45 Stockholm (SE)
(72) Inventor: SCHULZ, Thomas, 91541 Rothenburg ob der Tauber (DE); NEGRETTI, Peter, 47122 Forli (IT); KAISER, Kersten, 91541 Rothenburg ob der Tauber (DE); BURKHARDT, Jennifer, 91541 Rothenburg ob der Tauber (DE)
(74) Representative: Electrolux Group Patents

(57) **Abstract**

A kitchen assistance robot (31) is mountable or mounted in a kitchen environment and comprises a robot body (33) and at least one robot arm (35) having a gripper device (37) or a hand device at one of its ends for gripping objects. The kitchen assistance robot (31), specifically the robot body (33), is preferably being moveable along a linear axis. At least one of the robot arm (35) and the gripper device (37) or hand device is moveable in six degrees of freedom for reaching the objects to be gripped. The kitchen assistance robot (31)
- is configured to perform kitchen work at a human operator's side and/or in collaboration with or beside the human operator, and
- comprises means for a control of the kitchen work performed by the kitchen assistance robot (31).
The control is exercised by a controlling person, particularly by the human operator working in collaboration or beside the kitchen assistance robot (31).

Further disclosed are a robotic system, a robot-assisted kitchen environment and a method for operating the kitchen assistance robot (31).

## Description

The present invention relates to a kitchen assistance robot, particularly an assistance robot for a domestic kitchen according to claim 1. The present invention further relates to a robotic system according to claim 7. The present invention further relates to a robot-assisted kitchen environment according to claim 8. Finally, the present invention relates to a method for operating the kitchen assistance robot according to claim 12.

Performing housework, specifically preparation of dishes, is attracting increasing interest. Cooking events in private circles among friends are nowadays more and more popular. However, such kind of food preparation is also associated with standard tasks, which take more time and are usually boring, e. g. peeling potatoes or clearing up and cleaning the kitchen countertop after the preparation activities. Therefore, in recent years kitchen assistance robots have been proposed, which shall relieve kitchen staff or other kitchen users, both in industrial and in domestic kitchens.

From DE 197 44 488 B4 a robot for operating household appliances, e. g. for removing tableware from dishwashers after a cleaning program, or executing specific kitchen work, e. g. performing tasks of a food processor, is known. Such specific kitchen work is performed by the disclosed robot in an autarkic operation.

It is an object of the present invention to provide a kitchen assistance robot, a robotic system, a robot-assisted kitchen environment and a method for operating the kitchen assistance robot, which enable an increased collaboration with a human operator, e. g. a kitchen staff, so as to jointly do the kitchen work.

The object is achieved by a kitchen assistance robot mountable or mounted in a kitchen environment and comprising a robot body and at least one robot arm having a gripper device or a hand device at one of its ends for gripping objects. At least one of the robot arm and the gripper device or hand device is moveable in six degrees of freedom for reaching the objects to be gripped. The kitchen assistance robot is configured to perform kitchen work at a human operator's side and/or in collaboration with or beside the human operator. Preferably, the kitchen assistance robot uses a common working area with the human operator. Further, the kitchen assistance robot comprises means for a control of the kitchen work, in particular of the collaborative kitchen work, performed by the kitchen assistance robot. Said control is exercised or execisable by a controlling person, particularly by the human operator working in collaboration or beside the kitchen assistance robot.

In particular, the kitchen assistance robot is an assistance robot for a domestic kitchen. The kitchen environment may be a kitchen cooking environment. The kitchen assistance robot, specifically the robot body, is preferably moveable along a linear axis. In particular, the kitchen assistance robot is axially moveable along a linear guiding rod or rail.

The kitchen assistance robot is preferably adapted to perform cooking preparation activities. Additionally or alternatively, cooking process assisting activities and/or cleaning or clearing up activities may be executable by the kitchen assistance robot.

The means for the control of the kitchen work may comprise a software program, which may be an application. The software program particularly comprises or has access to recipe information for a preparation and/or cooking of dishes or meals.

The software program is preferably located on a computing device. Communication means are included for a communication, preferably for a wireless communication, between the kitchen assistance robot and the computing device. Said communication particularly includes a transmission of control commands from the computing device to the kitchen assistance robot. Said computing device is preferably a mobile device, e. g. a smartphone, a tablet computer, a notebook, or the like.

According to an embodiment, the kitchen assistance robot includes at least one integrated sensor means. Additionally or alternatively, data transmission means for data transmission with at least one externally arranged sensor device are included.

The integrated sensor means and/or the externally arranged sensor device may be at least one camera, which provides information about the kitchen environment. Said information may include a detection of a presence and/or of moving directions of a living being, in particular of the human operator, who works in collaboration with the kitchen assistance robot, or of any other person or a domestic animal. Also the detection of an object, which is specifically located on a kitchen countertop, may be one subject of the information.

According to a specific embodiment of the invention, the gripper device or hand device includes or is adapted to grasp a tool for performing kitchen work. Said tool is preferably exchangeable and/or removable from the gripper device or hand device.

The object is also achieved by a robotic system, which comprises the kitchen assistance robot according to anyone of the afore-mentioned embodiments and which further comprises at least one external camera and a software program for a control of the kitchen work performed by the kitchen assistance robot. The at least one external camera is adapted to provide information about local conditions to the kitchen assistance robot. Said local conditions may include conditions of at least one working place of the kitchen environment or, preferably, of the whole kitchen environment. The at least one external camera may be a 3D camera. For an increased monitoring effect, at least two cameras are preferably provided.

The object is also achieved by a robot-assisted kitchen environment, which comprises the kitchen assistance robot or the robotic system according to anyone of the afore-mentioned embodiments and at least one kitchen appliance. Said kitchen appliance is particularly a cooking hob, an oven, an extractor hood, a dishwasher, a refrigerator and/or a freezer. The kitchen assistance robot and the at least one kitchen appliance comprise communication means, particularly wireless communication means, for a communication and/or data transmission, which may be uni- or bidirectional, between the kitchen assistance robot and the household appliance. Moreover, a water supply means, which may be a sink including an IR tap, is preferably included as well.

An advantageous embodiment of the present invention provides for a robot-assisted kitchen environment, a robotic system or a kitchen assistance robot, as it has been described by whichever embodiment above, which is characterized by at least two cameras, which are arranged or arrangeable in the kitchen environment in a way as to monitor at least one working place of the kitchen environment or, preferably, the whole kitchen environment, from different viewing directions and/or viewing angles. The information resulting from the monitoring provides a basis for a data transmission from the related camera to the kitchen assistance robot, which data transmission may go directly or via the computing device.

Another or alternative embodiment provides for a robot-assisted kitchen environment, a robotic system or a kitchen assistance robot, which is configured and/or mounted or mountable in the kitchen environment, particularly on or next to a kitchen island or kitchenette, in a way that opposite ends of a countertop are accessible to the robot arm and/or the gripper device or hand device. Naturally, said access to the opposite ends includes also the space between these two extreme positions.

A preferred embodiment or preferred embodiments of the kitchen assistance robot or of the robot-assisted kitchen environment is or are characterized by a storage garage for parking the kitchen assistance robot during its non-active conditions or periods. The kitchen assistance robot may be stored in the garage completely or only its robot arm may be subject to parking. Additionally or alternatively, the kitchen assistance robot or the robot-assisted kitchen environment may include or may be allocated to a tool station designed to store and provide at least one tool for being grabbed by the kitchen assistance robot, particularly by the gripper device or hand device. Said tool is particularly a sponge or a kitchen utensil.

The object is further achieved by a method for operating the kitchen assistance robot according to anyone of above-described embodiments, wherein a controlling person provides the kitchen assistance robot with at least one command causing the kitchen assistance robot to execute at least one preparation step and/or cooking step. Said controlling person is particularly a human operator, who works in collaboration or beside the kitchen assistance robot. The at least one command may be provided at any time before starting and also during execution of the preparation or cooking process.

A specific embodiment of the method according to the invention is characterized by a human operator, who selects from a list of instructions specific tasks to be executed by the kitchen assistance robot. The kitchen assistance robot may be instructed or triggered to immediately start with the accomplishment of the kitchen work or task. Alternatively, the human operator may set a starting time for the kitchen assistance robot or a time for finalization of the kitchen work may be set. Specifically at any time, the human operator may be able to set the kitchen assistance robot in a pause mode and/or an instruction already provided to the kitchen assistance robot may be cancelled or postponed.

Certain tasks, in particular a specific preparation step or a cooking step, may be generally or automatically assigned to the kitchen assistance robot and there may be no need for the human operator to specifically select them. One kitchen work that is generally assigned or assignable to the kitchen assistance robot may be the task to clean or clear up a kitchen countertop.

Another specific embodiment provides a data storage means, which provides recipe information including single preparation steps, which are selectively and/or individually assignable or assigned to the kitchen assistance robot. The other preparation or cooking steps, which are not assignable or assigned to the kitchen assistance robot, may then be subject to the human operator performing these activities. Said data storage means, which may be or include a recipe book, is preferably available on or accessible by the mobile device that is used for controlling the kitchen assistance robot.

According to one particularly preferred embodiment, the kitchen assistance robot controls the household appliance and/or operates the water supply means. Said control function over the household appliance may be limited to only certain, in particular less critical, operations of the household appliance. Further, at least one camera may provide information to the kitchen assistance robot about presence and specific location, e. g. on the kitchen countertop, of particular objects, which the kitchen assistance robot has to clear or to remove.

Novel and inventive features of the present invention are set forth in the appended claims.

The present invention will be described in further detail with reference to the drawing, in which
- Fig. 1: illustrates a perspective view of a kitchenette of a household comprising a collaborative kitchen robot;
- Fig. 2: is a schematic side view of the collaborative kitchen ro-bot of Fig. 1 having a base portion of a robot body in-cluded in a rear section of a kitchen base;
- Fig. 3: schematically illustrates a slightly different embodiment of the collaborative kitchen robot according to Fig. 2 with a further or different task performance; and
- Fig. 4: is an illustration of a smartphone display showing an app for controlling the collaborative kitchen robot.

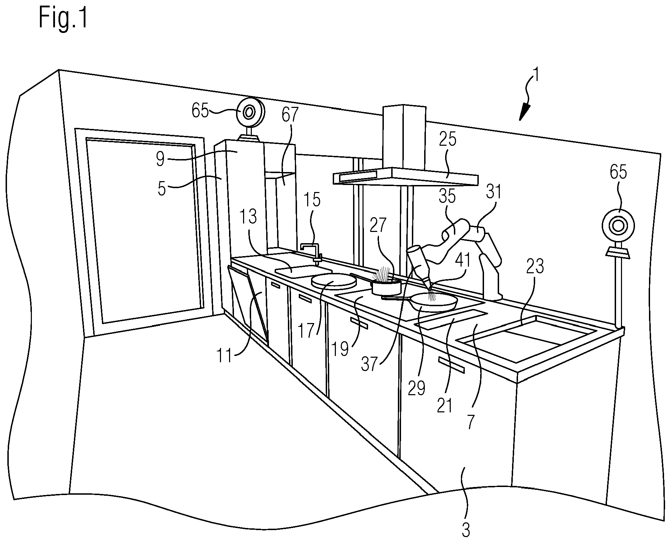

Fig. 1 illustrates in a perspective view a kitchenette 1 as is common in different households. The kitchenette 1 according to the illustration is in a single-line alignment, which is only an example and other arrangements of the cabinet elements 3, 5 and the implemented kitchen appliances 11, 19, 25 are considerable. It may be positioned at a kitchen wall or it may be a kitchen island that is arranged distant from any kitchen wall, particularly for providing kitchen work from all its sides.

The kitchenette according to Fig. 1 comprises a number of cabinet elements 3, 5 arranged side by side like an unbroken line. The present example of Fig. 1 is an arrangement of solely base cabinets 3 and a tall cabinet 5 forms an end element of the kitchenette 1. Although the illustrated kitchenette 1 does not comprise any hanging cabinets, such cabinet elements may generally be comprised as well.

A top side of the arrangement of base cabinets 3 is covered by a countertop 7, which is of a continuous design and abuts a sidewall 9 of the tall cabinet 5. The kitchenette 1 comprises several kitchen appliances 11 partly implemented in the arrangement of side by side cabinets 3, wherein some of the kitchen appliances may be integrated in the interior of a cabinet element 3, while others may be slid-in without any surrounding by a cabinet 3. An example for the latter case is a dishwasher 11, in Fig. 1 illustrated by an open door element.

Also in the countertop 7 a number of appliances or devices are fed-in. These appliances or devices are from left to right: a sink unit 13 fillable with water by a tap 15, which in the present example is an IR tap operable by merely approaching an IR sensor (not shown); a container 17 for spices, salt and long-lasting food (according to Fig. 1 only placed on top of the countertop 7, rather than implemented therein); a cooking hob 19, which is preferably an induction cooking hob; a toolbox 21 for providing tools for kitchen work, e. g. a sponge or kitchen utensils; and a tray 23 for storing and providing ingredients for specific dish to be prepared and cooked. An extractor hood 25 is arranged in a hanging position above the cooking hob 19 in a distance from the top side, e. g. formed by a glass plate, of the cooking hob 19 for extraction of cooking smells. Instead of the illustrated hanging extractor hood 25, also a downdraft hood may be implemented in the kitchenette 1, which may be an integral part of the cooking hob 19. Fig. 1 also shows a pot 27 and a pan 29, both being placed on the cooking hob 19 for performing a cooking process. The kitchenette 1 further comprises a trash bin, particularly with different compartments for different waste, which is located in one cabinet element 3 or below the cabinet (not shown). In case of its arrangement in a cabinet element 3, an allocated cutout in the countertop 7 may be provided, so that the waste can be moved to the trash bin from the top side of the countertop 7.

The kitchenette 1 is further equipped with a collaborative kitchen robot, which is moveably arranged close to a rear edge of the countertop 7. Said collaborative kitchen robot is kitchen assistance robot 31, which is configured to support a kitchen staff, generally a human operator, i. e. a user of the kitchenette 1, in usual kitchen work. The kitchen robot 31 is adapted to help the user e. g. in cleaning the kitchen and assisting during the cooking process. Thereby, the kitchen robot 31 is designed to work hand in hand with human beings. In a shared work process, this apparatus is provided for supporting and relieving the human operator.

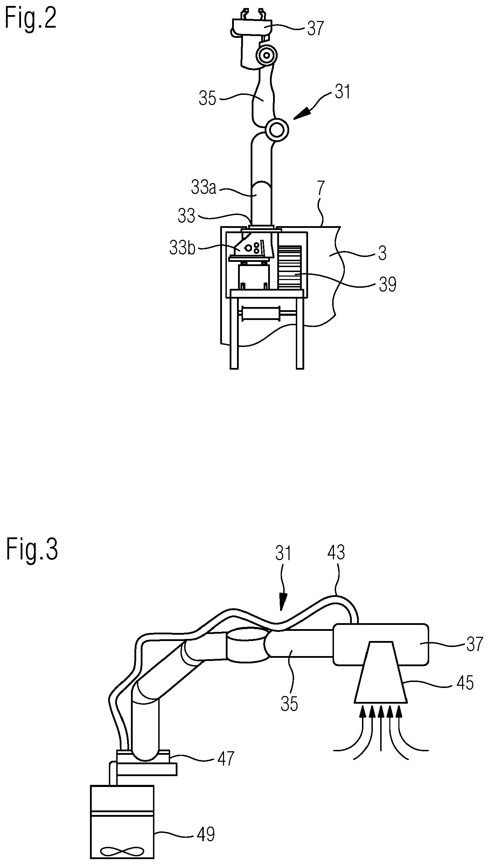

As can be best seen in Fig. 2, which is a side view of the kitchen robot 31 and a sectional view of a cabinet element 3, the kitchen robot 31 comprises a robot base 33 with an upper 33a and a lower 33b portion, a robot arm 35 and a gripper device 37, wherein the robot arm 35 forms an intermediate section between robot base 33 and gripper device 37. The upper portion 33a of the robot base 33 is arranged above the countertop 7, while the lower portion 33b is included in the cabinet 3 space. In order to enable the moveable arrangement of the kitchen robot 31 along a linear axis close to the rear upper edge of the cabinet, the lower base portion 33b is equipped with a linear actuator means, which may comprise, as illustrated in Fig. 2, a gear drive system 39.

The gripper device 37 includes or is adapted to grasp a tool 41 for performing kitchen work, which tool 41 is preferably exchangeable and/or removable from the gripper device 37. The kitchen robot 31 is configured to self-dependently grab a tool 41 from the toolbox 21. The tool 41 is dedicated for a robot use, but it may be have a uniform design, so that it can be used both from the kitchen robot 31 and from the user.

The robot arm 35 and the above-mentioned moveable arrangement are designed that way that all areas of the countertop 7 are accessible by the collaborative kitchen robot 31. To this end, the robot arm 35 has seven degrees of freedom, which means the total number of independent displacement or aspect of motion.

One particular task of the kitchen robot 31 is to remove objects from and to clean the countertop 7 after the preparation and cooking activities. Fig. 3 shows a kitchen robot 31, which is similar to the embodiment of Fig. 2, however, it additionally includes a suction hose 43 with a suction funnel 45 at its inlet, as well as a suction device 47 for drawing in kitchen waste particles. Said suction device 47 is arranged beneath the countertop 7 and includes a filter. This suction device 47 leads to a trash bin 49, arranged beneath the countertop 7, too. Hence, the suction hose 43 can act like a vacuum cleaner for the countertop 7.

The kitchen robot 31 can interact, i. e. communicate, with other devices like kitchen appliances 11, 19, 25 connected to a network, such as a connected hob, a connected hood, a smartphone device 51 with an application, etc.. Said network connection may be wireless. An interaction with a cooking hob 19, specifically an induction cooking hob 19, may include a full control of the cooking hob 19 by the kitchen robot arm 35, such as turning on/off the hob 19 and setting a power level, which interaction is particularly supervised by the human operator.

Said supervision and a control of the kitchen robot 31 is performed by means of a smart device, such as a smartphone 51, in conjunction with a specific software program, in general referred to as application. More in general, the application allows the user to control the kitchen robot 31, particularly sending commands for the kitchen robot 31 to cook. Those commands can be sent before the cooking process and during the cooking process. The application is configured to assign specific tasks of kitchen work to the kitchen robot 31, so that the user can focus on other tasks in the meantime. The user can select from a list of tasks, which tasks should be executed by the kitchen robot 31. Certain tasks can be disabled and tasks may be automatically done by the kitchen robot 31.

Assignment of tasks to the kitchen robot 31 may be executed in a way that the user works "hand in hand" with the kitchen robot 31, just as two human operators would do when jointly doing the food preparation. For example, while the kitchen robot 31 is cooking a pasta recipe, the user can bake deserts in the same cooking area than the kitchen robot 31. It needs to be mentioned that both user and kitchen robot 31 can use the same utensils in the kitchen, wherein a general priority to the user may be provided, so that the kitchen robot 31 either has to wait until the needed kitchen utensil is available or a similar utensil has to be selected by the kitchen robot 31.

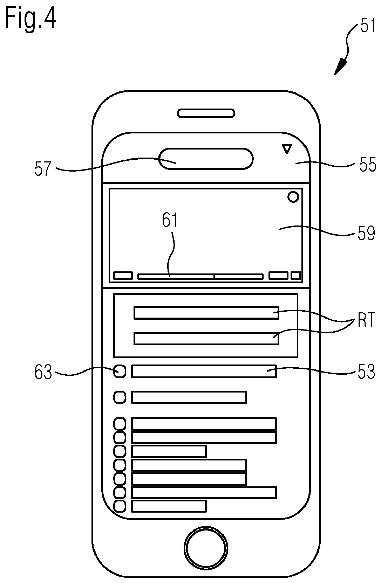

Fig. 4 illustrates an example of an application on a smartphone 51. As can be seen on the smartphone display 55, the user wants to prepare "Pasta spirals with fresh tomato sauce". With a touch field 57 in an upper area of the application page another recipe may be searched and selected from a recipe book included in the application. The selected meal is presented as an image 59, so that the user may have a first impression in case of a selection of an unknown meal. Within the image 59 a time bar 61 is shown, which indicates the approximate time needed for the preparation of the meal, either by including or excluding the cooking time.

The recipe book of the application provides recipes wherein the tasks 53 of the recipe are put into a list, from which the user can select the different tasks 53 the kitchen robot 31 shall perform. To this end, each selectable task 53 is provided with a tick box 63 for selecting the assignment. In the example of Fig. 4, a selection of a specific tick box 63 means that the related task 53 will be performed by the user, while non-selected tasks 53 are automatically assigned to the kitchen robot 31. Of course, the application may alternatively be designed in an opposite way, so that the selection of a tick box 63 means that the related task 53 shall be performed by the kitchen robot 31. With confirmation of the list of actions, the user can set a time when the kitchen robot 31 shall start the process, or, alternatively, the kitchen robot 31 will start directly after the confirmation.

For a better control of the performance of the kitchen robot 31 several sensors including at least two cameras 65, particularly IR cameras, are installed in the kitchen environment. The cameras 65 are positioned distant from each other, i. e. on opposite sides of the kitchenette 1, so that a full overview of the kitchen countertop 7 area is provided. Thereby, the two cameras 65 provide information regarding the kitchen cooking environment including human detection as well as objects detection on the surface of the kitchen countertop 7, specifically by creating a 3D map of the whole kitchen environment. This enables the application to receive in live time the images from the cameras 65 and a real video of the cooking process can be performed in the smartphone application. That way, the full cooking process is visible for the user in the mobile application including the possibility to select a pause function, i. e. to stop for a limited period of time until a "Continue" button will be pressed, or to abort the cooking process at any time. During the cooking process the user can at any time choose via the application that the kitchen robot 31 stops executing the task.

At the end of the cooking process, the kitchen robot 31 is charged with the task to remove and clear up objects, such as kitchen utensils, and to clean the kitchen countertop 7 surface. The kitchen robot 31 is supported therein by the cameras 65, which feed the kitchen robot 31 with information about presence and location of objects left lying around or any dirt on the countertop 7 surface. In that case, the kitchen robot 31 is configured to not only clean the specific dirty location, but the whole zone around the dirt is cleaned. As an example, if a dirty spot on the surface of the cooking hob 19 is detected by at least one camera 65, the kitchen robot 31 is configured to clean the whole cooking hob 19.

Finally, a dedicated storage garage 67 for the kitchen robot 31, either in its entirety or particularly for the robot arm 35, is located on one of the end of the kitchenette 1, namely included in the tall cabinet 5. The kitchen robot 31 is stored in this storage garage 67, when not being used in the kitchen.

The afore-described kitchen robot 31 can be helpful particularly for a physically challenged person, who may be supported by this assistant device in performing tasks, which cannot be executed due to the handicap.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 1: kitchenette
- 3: base cabinets
- 5: tall cabinet
- 7: countertop
- 9: sidewall
- 11: dishwasher
- 13: sink unit
- 15: tap
- 17: container
- 19: cooking hob
- 21: toolbox
- 23: tray
- 25: extractor hood
- 27: pot
- 29: pan
- 31: kitchen robot
- 33: robot base
- 33a, 33b: upper, lower portions
- 35: robot arm
- 37: gripper device
- 39: gear drive system
- 41: tool
- 43: suction hose
- 45: suction funnel
- 47: suction device
- 49: trash bin
- 51: smartphone
- 53: tasks
- 55: display
- 57: touch field
- 59: image
- 61: time bar
- 63: tick box
- 65: cameras
- 67: storage garage

## Claims

1. A kitchen assistance robot (31), particularly an assistance robot for a domestic kitchen, mountable or mounted in a kitchen environment, particularly a kitchen cooking environment, and comprising a robot body (33) and at least one robot arm (35) having a gripper device (37) or a hand device at one of its ends for gripping objects, the kitchen assistance robot (31), specifically the robot body (33), preferably being moveable along a linear axis, particularly axially moveable along a linear guiding rod or rail, wherein at least one of the robot arm (35) and the gripper device (37) or hand device is moveable in six degrees of freedom for reaching the objects to be gripped, and wherein the kitchen assistance robot (31)
- is configured to perform kitchen work at a human operator's side and/or in collaboration with or beside the human operator, and preferably using a common working area with the human operator, and
- comprises means for a control of the kitchen work, in particular of the collaborative kitchen work, performed by the kitchen assistance robot (31), the control being exercised by a controlling person, particularly by the human operator working in collaboration or beside the kitchen assistance robot (31).

2. The kitchen assistance robot (31) according to claim 1,
**characterized in that**
the kitchen assistance robot (31) is adapted to perform cooking preparation activities and/or cooking process assisting activities and/or cleaning or clearing up activities.

3. The kitchen assistance robot (31) according to claim 1 or 2,
**characterized in that**
the means for the control of the kitchen work comprises a software program, specifically an application, the software program particularly comprises recipe information.

4. The kitchen assistance robot (31) according to claim 3,
**characterized in that**
the software program is located on a computing device (51), preferably on a mobile device, wherein communication means are included for a communication, preferably for a wireless communication, between the kitchen assistance robot (31) and the computing device (51), particularly for a transmission of control commands from the computing device (51) to the kitchen assistance robot (31).

5. The kitchen assistance robot (31) according to anyone of the preceding claims,
**characterized in that**
the kitchen assistance robot (31) includes at least one integrated sensor means and/or comprises data transmission means for data transmission with at least one externally arranged sensor device.

6. The kitchen assistance robot (31) according to claim 5,
**characterized in that**
the integrated sensor means and/or the externally arranged sensor device is at least one camera (65), which provides information about the kitchen environment, in particular information about a detection of presence and/or of moving directions of a living being, in particular of the human operator, and/or detection of an object, which is specifically located on a kitchen countertop (7).

7. A robotic system comprising
- the kitchen assistance (31) robot according to anyone of the preceding claims,
- at least one external camera (65), preferably at least two cameras (65), particularly 3D cameras, and
- a software program for a control of the kitchen work performed by the kitchen assistance robot (31),
wherein the at least one external camera (65) is adapted to provide information about local conditions, in particular about conditions of at least one working place of the kitchen environment, preferably of the whole kitchen environment, to the kitchen assistance robot (31).

8. A robot-assisted kitchen environment comprising
- the kitchen assistance robot (31) or the robotic system according to anyone of the preceding claims,
- at least one kitchen appliance, particularly a cooking hob (19), an oven, an extractor hood (25), a dishwasher (11), a refrigerator and/or a freezer,
- preferably a water supply means, in particular a sink (13) including an IR tap (15),
wherein the kitchen assistance robot (31) and the at least one kitchen appliance (11, 19, 25) comprise communication means, particularly wireless communication means, for a communication and/or data transmission between the kitchen assistance robot (31) and the kitchen appliance (11, 19, 25).

9. The robot-assisted kitchen environment, the robotic system or the kitchen assistance robot (31), according to anyone of the preceding claims,
**characterized in that**
at least two cameras (65) are arranged or arrangeable in the kitchen environment for a monitoring of at least one working place of the kitchen environment, preferably of the whole kitchen environment, and/or for a detection of a living being within the kitchen environment from different viewing directions and/or viewing angles, wherein information resulting from the monitoring provides a basis for a data transmission from the related camera (65) to the kitchen assistance robot (31) .

10. The robot-assisted kitchen environment, the robotic system or the kitchen assistance robot (31), according to anyone of the preceding claims,
**characterized in that**
the kitchen assistance robot (31) is configured and/or mounted or mountable in the kitchen environment, particularly on or next to a kitchen island or kitchenette, in a way that opposite ends of a countertop (7) are accessible to the robot arm (35) and/or the gripper device (37) or hand device.

11. The kitchen assistance robot (31) according to anyone of the claims 1 to 6 or the robot-assisted kitchen environment according to anyone of the claims 8 to 10,
**characterized by**
- a storage garage (67) for parking the kitchen assistance robot (31), particularly for parking the robot arm (35), and/or
- a tool station (21) designed to store and to provide at least one tool (41), in particular a sponge or kitchen utensils, for being grabbed by the kitchen assistance robot (31), particularly by the gripper device (37) or hand device.

12. A method for operating the kitchen assistance robot (31) according to anyone of the claims 1 to 6, wherein a controlling person, in particular a human operator working in collaboration or beside the kitchen assistance robot (31), provides the kitchen assistance robot (31) with at least one command, particularly before starting and/or during execution of the preparation or cooking process, for an execution of at least one preparation step and/or cooking step performed by the kitchen assistance robot (31).

13. The method according to claim 12,
**characterized in that**
a data storage means, which is preferably available on or accessible by a mobile device (51) that is used for controlling the kitchen assistance robot (31), provides recipe information including single preparation steps (53), which are selectively and/or individually assignable to the kitchen assistance robot (31).

14. The method according to claim 12 or 13,
**characterized in that**
at least one task (53), in particular a specific preparation step or a cooking step, is generally assigned or assignable to the kitchen assistance robot (31), preferably the task of cleaning or clearing up a kitchen countertop (7).

15. The method according to anyone of the claims 12 to 14,
**characterized in that**
the kitchen assistance robot (31) controls the kitchen appliance (11, 19, 25) and/or operates the water supply means (15) and/or at least one camera (65) provides information about presence of particular objects for the kitchen assistance robot (31) to clear or to remove objects from a kitchen countertop (7).
